# EUROPEAN PATENT APPLICATION

(11) **EP 1 566 107 A1**
(43) Date of publication of application: **24.08.2005**
(21) Application number: 03712150.6
(22) Date of filing: 07.04.2003
(51) Int. Cl.: A23K 3/02

(54) **METHOD FOR DRYING LEAVES FROM BANANA TREES WHILE PRESERVING THE PHYSIOLOGICAL TANNIN CONTENT AND THE USE THEREOF AS FOOD COMPLEMENT FOR ANIMALS**

(30) Priority: 16.04.2002 ES 200200893
(71) Applicant: Ruiz Gabaldon, Angel, 28028 Madrid (ES)
(72) Inventor: Ruiz Gabaldon, Angel, 28028 Madrid (ES)
(74) Representative: Garcia-Cabrerizo y del Santo, Pedro Maria
(86) International application number: PCT/ES2003/000159
(87) International publication number: WO 2003/086101

(57) **Abstract**

The invention relates to a method for drying tannin-rich banana tree leaves. The method involves drying said leaves in refrigerated chambers at a temperature of 2 °C during 24 hours. The method enables maximum preservation of the active principles and essential oils of the plant. The drying method concludes once humidity of the product is less than 8 %. The resulting product is used as food complement for animals.

## Description

### OBJECT OF THE INVENTION

The present invention refers to the physiological tannin existing in the sap of plants formed in normal plant life conditions. Banana tree *(Musa spp.)* tannin object of this invention is contained in a high concentration in its sap, and its incorporation to the blood is carried out through the intestinal route.

### BACKGROUND OF THE INVENTION

Pathological tannins existing in plant trunk and branch galls, such as in holm oak, oak, elm, willow, fir, quebracho, and chestnut trees, etc., are used as tanners since the combination of tannin with hide gelatin forms a substance converting the hide into leather - rot-proof hide. Pathological tannins contain glycosides (bitter poisons against insects).

Physiological tannins are found naturally in plants along with these pathological tannins. The sap of banana tree leaves contains 90% physiological tannins. Tannin is an astringent substance and the opposite, it hardens tissues and is eliminated through urine.

### DESCRIPTION OF THE INVENTION

The banana tree is a food plant yielding bananas *(Musa paradisiaca, Musa sapientum*).

This plant grows quickly, and the spike, which becomes the stem of the bunch, sprouts after two months, and the fruit is collected seven to twelve months later.

Each banana tree bears fruit only once, and once the fruit cluster is collected, the farmers cut the tree at the base in order to grow a new banana tree, and so on and so forth for fifty years.

The banana tree is not a tree, but rather a giant stem. The sap contained in its leaves is very rich in physiological tannin, containing 90%. Once the banana cluster has been yielded, when the tannin contained in said leaves is mixed with food for animals, it favors good digestion and assimilation of the rest of the food.
1. Harvest: the leaves are harvested thirty days after having cut the cluster of bananas because this is the most appropriate time for doing so, during the day working in maximum heat hours must be avoided.
2. Processing: once the product reaches the drying center, the following operations will be performed: foreign object removal and leave selection and washing.
   In a product such as banana tree leaves, which contain up to 80% water, the drying method will be carried out in a laboratory as close as possible to their harvest. Said method will be carried out quickly.
3. Preservation: the fresh plant preserves poorly, it being necessary to subject it immediately to a stabilization treatment, and the method to be used is by means of drying in cooled chambers at 2°C for 24 hours, thereby achieving maintaining the essential oils and active ingredients of the plant: tannin, nitrogen, phosphorus, potassium, calcium and magnesium.
4. Packaging: the drying method ends when the product has a moisture content that is below 8%. The dry leaves will be cut at a size of 2-3 cm.

The container must assure that the product is protected from light, moisture and odors. The product will be vacuum packed in polypropylene bags and Kraft paper on the end portion and the containers will comply with the laws in force, and they will be duly labeled and have standardized weight.

When farms are close to banana tree plantations, it is recommendable for the animals to consume fresh leaves daily mixed with the rest of the other food.

The leaves that are not optimal food complements plus the remains in the laboratories once the plant is atomized become excellent fertilizer after being ground.

If the leaves are optimal, water not suitable for drinking mixed with these leaves becomes drinkable.

### APPLICATION OF THE DRIED LEAVES

First and foremost, the physiological tannin of the banana tree is a natural food suitable for animal consumption. It favors good digestion and assimilation of foods.

Dried leaves taken as a food complement are the best stabilizer for the animal organism, preventing any type of foreign agents in the organism due to the tannin they contain.

To prepare the dose, mix the dried leaves from the banana tree in troughs at a ratio of 3-5% with the other foods. Water is essential for full tannin assimilation.

## Claims

1. A method for drying leaves from banana trees, **characterized in that** once said leaves are harvested and foreign objects are removed, they are washed and cut up while fresh, and they will be subjected to a drying treatment in cooled chambers at a temperature of 2°C.

2. A method according to claim 1, **characterized in that** the drying treatment will last 24 hours.

3. A method according to claims 1 and 2, in which the leaves are considered dried when their moisture content is less than 8%.

4. Use of the leaves from the banana tree once they are dried as a food complement for animals.

## Amended claims

### Amended claims under Art. 19.1 PCT

1. A method for drying leaves from banana trees, **characterized in that** once said leaves are harvested and foreign objects are removed, they are washed and cut up while fresh, and they will be subjected to a drying treatment in cooled chambers at a temperature of 2°C.

2. A method according to claim 1, **characterized in that** the drying treatment will last 24 hours.

3. A method according to claims 1 and 2, in which the leaves are considered dried when their moisture content is less than 8%.

4. Use of the leaves from the banana tree once they are dried by means of the method of claims 1 to 3 as a food complement for animals.
